# EUROPEAN PATENT SPECIFICATION

(11) **EP 2 202 738 B1**
(45) Date of publication and mention of the grant of the patent: **06.06.2012**
(21) Application number: 09169395.2
(22) Date of filing: 03.09.2009
(51) Int. Cl.: G11B 7/135, G11B 7/085

(54) **Optical pickup apparatus and method of controlling the same**
Optische Lesekopfvorrichtung und Steuerungsverfahren dafür
Appareil de capture optique et son procédé de commande

(30) Priority: 26.12.2008 KR 20080134060
(43) Date of publication of application: 30.06.2010
(73) Proprietor: Samsung Electronics Co., Ltd., Suwon-si Gyeonggi-do 442-742 (KR)
(72) Inventor: Kang, Hyung Hoon, Seoul (KR); Yoon, Yong Han, Gyeonggo-Do (KR); Choi, Byoung Ho, Gyeonggi-do (KR); Uto, Toshiki, Gyeonggi-do (KR); Jung, Soo Yul, Gyeonggi-Do (KR)
(74) Representative: Grootscholten, Johannes A.M.

(56) References cited:
- EP-A1- 1 975 931
- EP-A2- 1 826 755
- EP-A2- 2 001 016
- US-A1- 2005 249 073
- US-A1- 2006 143 637
- US-A1- 2007 268 806

## Description

### BACKGROUND

### 1. Field of the Invention

Embodiments of the invention relate to an optical pickup apparatus, and more particularly, an optical pickup apparatus to correct an aberration with a positionally adjustable lens and a method of controlling the same.

### 2. Description of the Related Art

Generally, an optical pickup apparatus is adopted in a compact disc (CD) player, a digital versatile disc (DVD) player, a CD-ROM drive, or a DVD-ROM drive to record information to or read information from an optical disc, such as a CD, a DVD, or a Blue-ray disc (BD), in a noncontact fashion.

In recent years, the BD has been actively developed as a next generation high-density optical disc using an object lens having a high numerical aperture (NA) of about 0.85. The BD uses a blue light source having a short wavelength (about 405 nm to about 408 nm) as a light source. The BD has a recoding capacity equivalent to approximately 10 times that of the DVD. When developing such a new-standard optical disc, compatibility between the developed optical disc and different optical discs, such as the CD and the DVD, comes into question.

Optical discs that are writable only once, such as a DVD-R and a CD-R, have considerably low reflexibility depending upon wavelengths. For this reason, the DVD-R and the CD-R use a light source having wavelengths of about 650 nm and about 780 nm. Consequently, an optical pickup apparatus for HD-DVDs and an optical pickup apparatus for BDs adopt a light source having two or three different wavelengths considering compatibility with the DVD-R and/or the CD-R. When adopting an object lens having an NA of about 0.85 as described above, spherical aberration caused by an error in the thickness of a substrate to protect a recording layer of the optical disc is proportional to the NA to the fourth. For an optical system using a high NA, therefore, a device to correct such a spherical aberration may be necessary.

In particular, when the optical pickup apparatus is used only to read information from an optical disc, aberration of a light spot is sufficiently corrected by correcting aberration of an object lens, with the result that it may be necessary to correct an aberration of a collimator lens. However, when the optical pickup apparatus is used to record information to an optical disc, aberration of a light spot is not sufficiently corrected by correcting aberration of the object lens, with the result that it may be necessary to correct an aberration of the collimator lens.

It may be necessary to move the collimator lens to an optimum position to correct the aberration of the collimator lens. To this end, it may be necessary to sense, through a sensor, whether the collimator lens is located at a reference position and to move the collimator lens from the reference position to the optimum position based on the sensed result. However, whether the collimator lens is located at the reference position may not be sensed if the sensor malfunctions or breaks, with the result that the movement for aberration correction is not performed. Also, it may be sensed that collimator lens is located at the reference position although the collimator lens is not located at the reference position, with the result that the collimator lens moves to collide with other optical members, whereby the collimator lens may be damaged.

US2006/0143637, against which the independent claims are delimited, relates to optimal pickup apparatus and teaches two embodiments in which the position of a drive member may be determined without using a sensor. The first embodiment relates to a movable lens used as a spherical aberration correction mechanism for an optical picup and the second relates to an mechanism for moving a whole optical pickup.

### SUMMARY

The invention provides an optical pickup apparatus and a method further comprising the features in the characterizing portions in the respective appended independent claims. Additional features and utilities of the invention will be set forth in part in the description which follows and, in part, will be obvious from the description, or may be learned by practice of the invention, and/or may be defined in the appended dependent claims.

### BRIEF DESCRIPTION OF THE DRAWINGS

These and/or other utilities of the invention will become apparent and more readily appreciated from the following description of the embodiments, taken in conjunction with the accompanying drawings of which:
FIG. 1 is a view illustrating an optical pickup apparatus according to exemplary embodiments of the invention;
FIGS. 2 and 3 are views illustrating a drive unit of the optical pickup apparatus according to exemplary embodiments of the invention;
FIG. 4 is a graph illustrating a signal applied to a motor mounted in the drive unit of the optical pickup apparatus according to exemplary embodiments of the invention;
FIG. 5 is a flow chart illustrating controlling the drive unit of the optical pickup apparatus according to exemplary embodiments of the invention; and
FIG. 6 is a view illustrating a drive unit of an optical pickup apparatus according to exemplary embodiments of the invention.

### DETAILED DESCRIPTION OF THE EMBODIMENTS

Reference will now be made in detail to the embodiments of the invention, examples of which are illustrated in the accompanying drawings, wherein like reference numerals refer to the like elements throughout.

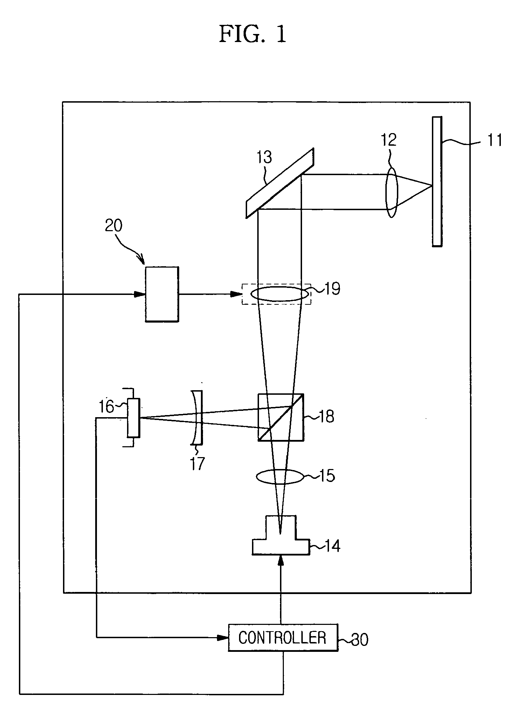

FIG. 1 is a view illustrating an optical pickup apparatus according to exemplary embodiments of the invention. The optical pickup apparatus records information to or reads information from at least one kind of an optical disc 11 having different recording densities. The optical pickup apparatus includes an object lens 12, a reflection mirror 13, a light source 14, an optical member 15, an optical detector 16, a sensing lens 17, an optical path converter 18, a collimator lens 19, a drive unit 20, and a controller 30.

The object lens 12 is disposed in the optical pickup apparatus to record information to or read information from the optical disc 11, where the optical disc 11 is a digital versatile disc (DVD), which is a low-density optical disc). The object lens 12 is disposed in the optical pickup apparatus to record information to or read information from a compact disc (CD). The object lens 12 may be disposed in the optical pickup apparatus to record information to or read information from a high definition digital versatile disc (HD-DVD), which is a higher-density optical disc than the DVD. The object lens 12 may have a numerical aperture (NA) of about 0.65 or less to record information to or read information from different optical discs that may have different data densities, including the CD, the DVD, and the HD-DVD, in a compatible manner such that the object lens 12 is suitable for an optical disc having a thickness of about 0.6 mm or more.

The object lens 12 may have an NA of about 0.85 or more such that the object lens 12 records information to or reads information from an optical disc having higher recoding density (i.e., a Blue-ray disc (BD) having a thickness of about 0.1 mm) than relatively low-density optical discs (e.g. CD, DVD, etc.).

The low-density object lens of the object lens 12 may include a plurality of object lenses having different NAs, and the high-density object lens of the object lens 12 may include a plurality of object lenses having different NAs. In this case, the collimator lens 19 is disposed in the optical pickup apparatus to correspond to each of the object lenses. A plurality of collimator lenses are movably installed on an optical path.

The object lens 12 may be supported by a blade or other suitable support such that the object lens is driven by an actuator (not illustrated) in a tracking direction and in a focusing direction.

When the object lens 12 is a single object lens allowing optical discs, including a CD, a DVD, and an HD-DVD, to be used in compatible manner, the light source 14 may be a laser diode to emit light having a wavelength of about 405 nm to about 408 nm, or any other suitable wavelength less than 500nm. The light emitted from the light source 14 may record information and/or read information from the HD-DVD.

The reflection mirror 113 may be disposed in the optical pickup apparatus between the object lens 12 and the collimator lens 19 to reflect collimated light passed through the collimator lens 19 to the object lens 12. The optical member 15 may be disposed in the optical pickup apparatus between the light source 14 and the optical path converter 18 to collect and guide the emitted light to the optical path converter 18.

The optical detector 16 receives light condensed to a recording surface of the optical disc 11 and reflected from the optical disc 11 using the object lens 12. The optical detector 16 may include a photo diode integrated circuit (PDIC) to detect an information signal and an error signal using the received light. The sensing lens 17 to magnify a spot of the light to be received by the optical detector 16 is disposed in the optical pickup apparatus before the optical detector 16 in the optical path.

The optical path converter 18 may be a polarization beam splitter to reflect or transmit incident light based on a polarized component of the incident light. The optical path converter 18 transmits light emitted from the light source 14, and reflects light reflected from the optical disc 11 toward the optical detector 16.

The collimator lens 19 is disposed in the optical path toward the object lens 12 to correct a spherical aberration when information is recorded to or read from three or more kinds of optical discs having different recording densities with the object lens 12. The collimator lens 19 collimates light to be incident on the object lens 12 into collimated light to correct a spherical aberration due to the different thicknesses of the optical discs.

The drive unit 20 moves the collimator lens 19 from a reference position (e.g., a first position) to an optimum position (e.g., a second position) to correct the spherical aberration of the optical disc 11. The optimum position may be changed based at least in part on the kinds of optical discs, which will be described below in more detail.

The drive unit 20 moves the collimator lens 19 to the optimum position based at least in part on the kinds of optical discs to correct a spherical aberration with respect to various kinds of optical discs, such as an optical disc having a single-layer recording surface and an optical disc having a multi-layer recording surface. When the operation of the optical pickup apparatus is stopped, the drive unit 20 does not return the collimator lens 19 to the reference position, so that the collimator lens 19 is located at the optimum position. When the optical pickup apparatus is driven again, and another kind of an optical disc different from the previous optical disc is inserted, the drive unit 20 moves the collimator lens 19 to an optimum position to correct a spherical aberration with respect to the inserted optical disc. As the drive unit 20 may not know the present position of the collimator lens 19, the drive unit 20 moves the collimator lens 19 to the reference position and then to the optimum position. During the movement of the collimator lens 19, therefore, collision of the collimator lens 19 with the reflection mirror 13, the optical path converter 18, and the optical member 15 is minimized and/or prevented, and thus damage is also minimized and/or prevented.
Hereinafter, the drive unit 20 to determine whether the collimator lens 19 is located at the reference position will be described.

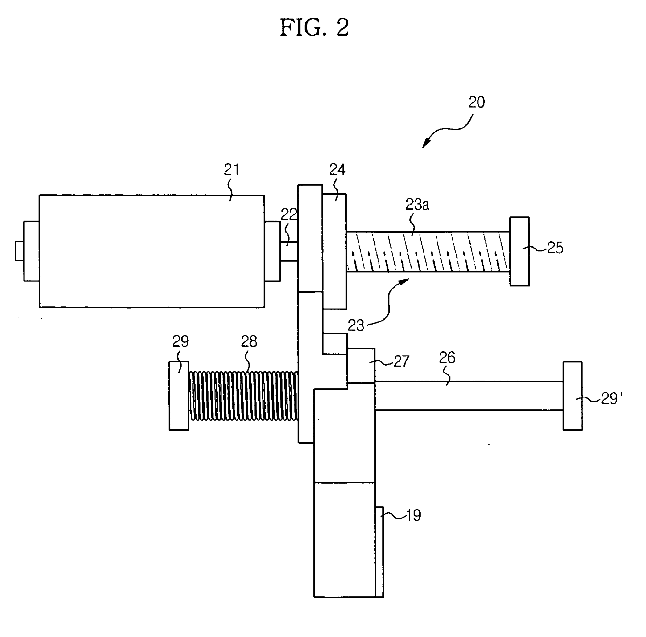

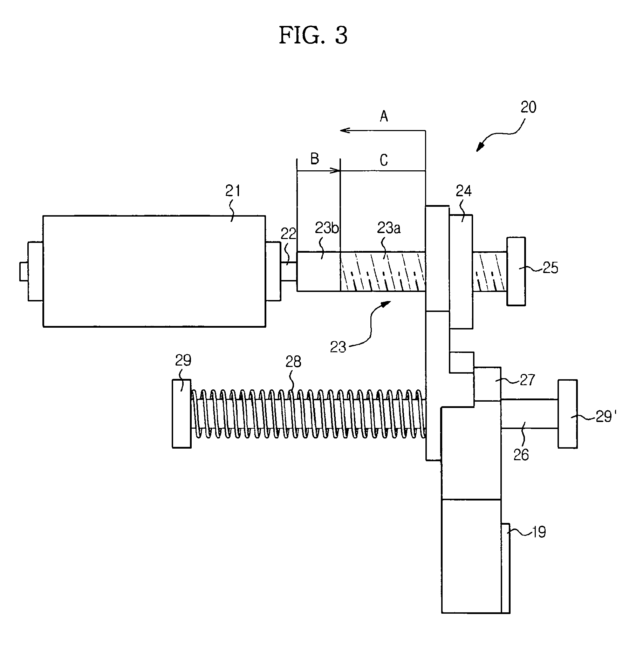

FIGS. 2 and 3 are views illustrating the drive unit 20 of the optical pickup apparatus according to exemplary embodiments of the invention. Specifically, FIG. 2 illustrates the driving of the drive unit 20 when the collimator lens 19 is located at the reference position, and FIG. 3 illustrates the driving of the drive unit 20 when the collimator lens 19 is located at the optimum position (i.e., target position).

The drive unit 20 of the optical pickup apparatus includes a motor 21, a rotary shaft 22 connected to the motor 21 such that the rotary shaft 22 is rotated by a rotary force transmitted from the motor 21, a rotary member 23 connected to the rotary shaft 22 such that the rotary member 23 is rotated, a lead member 24 disposed on the rotary member 23 such that the lead member 24 moves along the rotary member 23 during the rotation of the rotary member 23, and a stopper 25 mounted to one end of the rotary shaft 22 to limit the movement of the lead member 24.

The rotary member 23 is disposed at the outer circumference thereof with a movement part 23a having a thread. At one side of the movement part 23a is provided a solid stop part 23b having no thread. That is, the rotary member 23 including the movement part 23a and the stop part 23b is formed in the shape of a bolt, and the lead member 24 is formed in the shape of a nut. As a result, the lead member 24 moves along the movement part 23a by the rotation of the movement part 23a during the rotation of the rotary member 23 but idles on the stop part 23b without movement.

Consequently, the stop part 23b is a stop position of the lead member 24 and is a reference position of the collimator lens 19 to correct an aberration. The collimator lens 19 is mounted in a holder. The holder in which the collimator lens 19 is mounted is connected to a connection member 27. Alternatively, the connection member 27 may include the holder in which the collimator lens 19 is disposed. The connection member 27 is connected to the lead member 24.

The drive unit 20 includes the connection member 27 connected to the lead member 24 such that the connection member 27 moves along with the lead member during the movement of the lead member 24, a guide member 26 inserted through the connection member 27 to guide the movement of the connection member 27, and stoppers 29 and 29' mounted to opposite ends of the guide member 26 to limit the movement of the connection member 27.

When the lead member 24 is engaged with the thread of the movement part 23a while the lead member 24 is located at the stop part 23b of the rotary member 23, an elastic member 28 to elastically push the connection member 27 connected to the lead member 24 is disposed between the connection member 27 and the stopper 29. That is, the elastic member 28 may have the maximum elastic force when the lead member 24 is located at the stop part 23b of the rotary member 23.

The motor 21 may include a stepping motor to rotate by a predetermined angle when a pulse signal is applied. The motor 21 may be driven in a first direction (e.g., the forward direction) and in a second direction (e.g., the reverse direction). During the forward rotation of the motor 21, the collimator lens 19 is moved away from the object lens 12 such that the distance between the collimator lens 19 and the object lens 12 increases. During the reverse rotation of the motor 21, the collimator lens 19 is moved toward the object lens 12 such that the distance between the collimator lens 19 and the object lens 12 decreases. That is, the holder holding the collimator lens 19 is movably installed on the optical path toward the object lens 12.

When a command signal to read information from or record information to the optical disc 11 is received by the optical pickup apparatus, the controller 30 controls the motor 21 to rotate the rotary shaft 22 such that the lead member 24 moves to the stop part 23b of the rotary member 23. The stop part 23b of the rotary member 23 is a reference position of the collimator lens 19. To move lead member 24 to the stop part 23b of the rotary member 23, the motor 21 rotates to such that the lead member 24 moves the total length of the rotary member 23. When the lead member 24 is located at the middle of the movement part 23a of the rotary member 23, the lead member 24 moves along the movement part 23a through the rotation of the motor 21 by one or more steps, and idles on the stop part 23b by the remaining steps. When the lead member 24 is located at one end of the rotary member 23, the lead member 24 moves along the movement part 23a and is located at the stop part 23b by the total steps.

The controller 30 determines kind of the inserted optical disc based on an information signal and an error signal transmitted from the optical detector 16, calculates an optimum position (i.e., target position) of the collimator lens 19 at which a spherical aberration with respect to the determined optical disc is minimized, and controls the drive unit 20 to be driven such that the collimator lens 19 is moved to the optimum position at which the spherical aberration is minimized.

When the collimator lens 19 is moved from the reference position to the optimum position, the controller 30 transmits a first signal to the motor 21 to engage the lead member 24 with the movement part 23a of the rotary member 23. When the engagement between the lead member 24 and the movement part 23a is completed, the controller 30 transmits a second signal to the motor 21 to move the collimator lens to the optimum position. When the recording to or the reading from the optical disc is completed, the controller 30 controls the operation of the optical pickup apparatus to be stopped.

When a signal to operate the optical pickup apparatus is transmitted again, the controller 30 transmits a first signal to the motor 21 to move the lead member 24 to the reference position along the movement part 23a of the rotary member 23.

When the recording to or the reading from the optical disc is completed, the lead member 24 may be moved back to the stop part 23b of the rotary member 23. When a signal to operate the optical pickup apparatus is transmitted again, the controller 30 transmits a first signal to the motor 21 to engage the lead member 24 with the movement part 23a of the rotary member 23.

The first and second signals are voltage signals applied to the motor 21. The voltage signal of the second signal is about 50 % less than that of the first signal. The motor 21 is driven by about 32 steps to engage the lead member 24 with the movement part 23a of the rotary member 23. Alternatively, the motor 21 may be driven by any suitable number of steps to engage the lead member 24 with the movement part 23a.

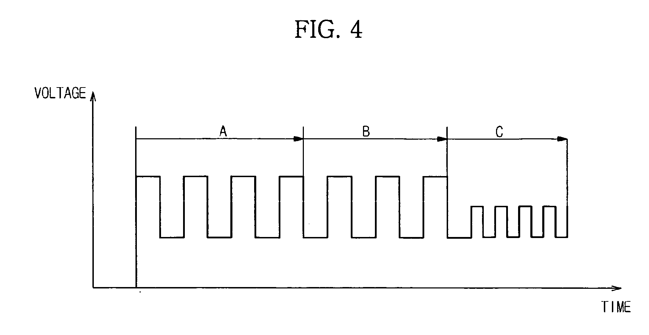

A more detailed description thereof will be given with reference to FIGS. 3 and 4. When the collimator lens 19 moves to the reference position, i.e., the stop part 23b (the direction indicated by the arrow identifying section A of FIG. 3), the elastic force of the elastic member 28 increases, with the result that the lead member 24 does not easily move along the movement part 23a. A voltage signal of the first signal (A of FIG. 4) is applied to the motor 21.

When the lead member 24 is engaged with the movement part 23a (section B of FIG. 3), the lead member 24 does not easily engage with the thread of the movement part 23a due to friction between the movement part 23a and the lead member 24. A large voltage signal (B of FIG. 4) is applied to the motor 21.

When the lead member 24 moves along the movement part 23a (section C of FIG. 3), the lead member 24 easily moves along the movement part 23a by the elastic force of the elastic member 28. A voltage signal of the second signal (C of FIG. 3) less than the first signal is applied to the motor 21, thereby reducing power consumption.

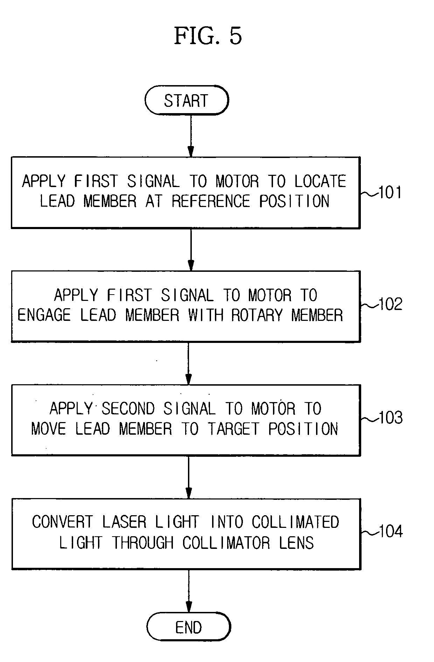

FIG. 5 is a flow chart illustrating controlling the drive unit of the optical pickup apparatus according to exemplary embodiments of the invention, which will be described with reference to FIGS. 1 to 4.

When a command signal to read information from or record information to the optical disc 11 is input, the optical pickup apparatus is driven to emit light from the light source 14 to the optical disc 11. When the light is reflected from the optical disc 11 and is received by the optical detector 16, the received light is read to determine kind of the optical disc 11. A spherical aberration corresponding to the determined optical disc 11 is retrieved and extracted from a memory (not illustrated).

A first signal is applied to the motor 21 of the drive unit 20 to drive the motor 21 in the forward direction. At this time, the motor 21 rotates to such an extent that the lead member 24 moves the total length of the rotary member 23. By the rotation of the motor 21, the collimator lens 19 connected to the lead member 24 moves away from the object lens 12. As the lead member 24 moves to the stop part 23b along the movement part 23a, the collimator lens 19 is located at a reference position (operation 101).

Although the motor 21 rotates such that the lead member 24 moves the total length of the rotary member 23 in a state in which the lead member 24 is located at the middle of the rotary member 23, the lead member 24 idles on the stop part 23b having no thread. That is, the lead member 24 does not move toward the motor 21.

When the driving of the motor 21 is stopped, the first signal is applied to the motor 21 to drive the motor 21 in the reverse direction by about 32 steps. By the rotation of the motor 21, the rotary member 23 rotates, and the connection member 27 is pushed by the elastic force of the elastic member 28, with the result that the lead member 24 connected to the connection member 27 is also pushed at operation 102. That is, the lead member 24 engages with the thread of the movement part 23a.

A second signal is applied to the motor 21 to drive the motor 21 in the reverse direction. The lead member 24 is moved along the thread of the movement part 23a. The collimator lens 19 connected to the lead member 24 moves toward the object lens 12.

The lead member 24 is moved to an optimum position (i.e., target position) where a spherical aberration is minimized considering the thickness from a disc protection layer to a recording layer based on kinds of optical discs (operation 103).

The movement distance from the reference position to the optimum position and the number of steps of the motor 21 based on the movement distance are values previously set based at least in part on the kinds of optical discs. For a BD, for example, a position having a movement distance of about 0.1 mm considering the thickness t of the disc protection layer (t = about 0.1 mm) is the optimum position where a spherical aberration is minimized. For an HD-DVD or a DVD, a position having a movement distance of about 0.6 mm considering the thickness t of the disc protection layer (t = about 0.6 mm) is the optimum position where spherical aberration is minimized.

After the lead member 24 is moved from the reference position to the optimum position corresponding to each of the optical discs, the driving of the drive unit 20 is controlled based at least in part on an information signal and error signal transmitted from the optical detector 15 to move the collimator lens 19 to the optimum position.

As the collimator lens 19 is located at the optimum position by the movement of the lead member, the spherical aberration is minimized. The collimator lens 19 converts the light emitted from the light source 14 into collimated light (operation 104). The collimated light is transmitted to the object lens 12. Consequently, the recording to or the reading from the optical disc is performed.

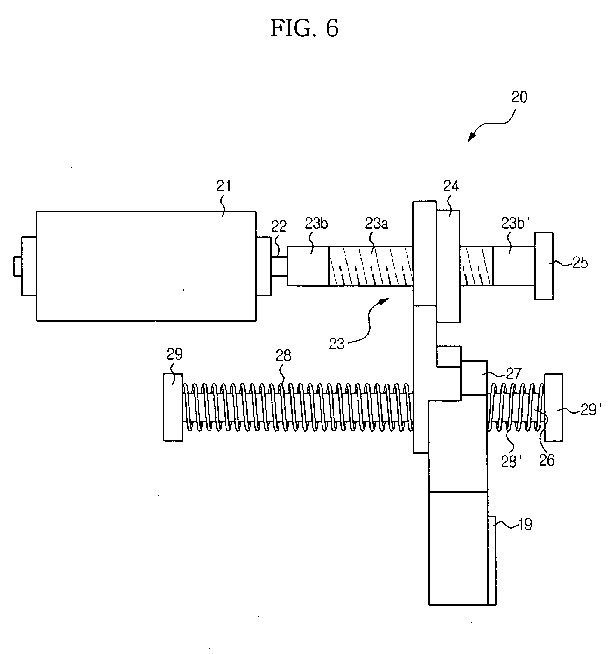

FIG. 6 is a view illustrating a drive unit of an optical pickup apparatus according to exemplary embodiments of the invention. Specifically, FIG. 6 illustrates the driving of the drive unit 20 when the collimator lens 19 is located at the optimum position.

The drive unit 20 of the optical pickup apparatus includes a motor 21, a rotary shaft 22 connected to the motor 21 such that the rotary shaft 22 is rotated by a rotary force transmitted from the motor 21, a rotary member 23 connected to the rotary shaft 22 such that the rotary member 23 is rotated, a lead member 24 disposed on the rotary member 23 such that the lead member 24 moves along the rotary member 23 during the rotation of the rotary member 23, and a stopper 25 mounted to one end of the rotary shaft 22 to limit the movement of the lead member 24.

The rotary member 23 is provided at the outer circumference thereof with a movement part 23a having a thread. At opposite sides of the movement part 23a are provided first and second solid stop parts 23b and 23b' having no thread. That is, the rotary member 23 including the movement part 23a and the first and second stop parts 23b and 23b' is formed in the shape of a bolt, and the lead member 24 is formed in the shape of a nut. The lead member 24 moves along the movement part 23a by the rotation of the movement part 23a during the rotation of the rotary member 23 but may idle on the first and second stop parts 23b and 23b' without movement.

The first and second stop parts 23b and 23b' are provided in opposite directions from the movement part 23a. The first stop part 23b is disposed adjacent to the motor 21, and the second stop part 23b' is disposed adjacent to the stopper 25.

The first stop part 23b is a stop position of the lead member 24 and is a reference position of the collimator lens 19 to correct an aberration. The second stop part 23b' is a limit position to limit the movement of the lead member 24 to minimize and/or prevent collision between the lead member 24 and the stopper 25 when overcurrent is applied to the motor 21.

The collimator lens 19 is mounted in a holder. The holder in which the collimator lens 19 is mounted is connected to a connection member 27. Alternatively, the connection member 27 may include the holder where the collimator lens 19 is mounted. The connection member 27 is connected to the lead member 24.

The drive unit 20 further includes the connection member 27 connected to the lead member 24 such that the connection member 27 moves along with the lead member during the movement of the lead member 24, a guide member 26 inserted through the connection member 27 to guide the movement of the connection member 27, stoppers 29 and 29' mounted to opposite ends of the guide member 26 to limit the movement of the connection member 27, and elastic members 28 and 28' disposed between the stoppers 29 and 29'.

A detailed description thereof will be given. When the lead member 24 is engaged with the thread of the movement part 23a while the lead member 24 is located at the reference position, i.e., the first stop part 23b, of the rotary member 23, the elastic member 28 is mounted between the connection member 27 and the stopper 29 for easy engagement. That is, when the rotary member 23 is rotated by the driving of the motor 21 while the lead member 24 is located at the reference position, i.e., the first stop part 23b, of the rotary member 23, the lead member 24 engages with the thread of the movement part 23a by an elastic force of the elastic member 28. At this time, the elastic member 28 is more compressed than the elastic member 28' because the lead member 24 is located at the reference position. The elastic force of the elastic member 28 is greater than that of the elastic member 28'.

When the lead member 24 is engaged with the thread of the movement part 23a when the lead member 24 is located at the limit position, i.e., the second stop part 23b', of the rotary member 23, the elastic member 28' is mounted between the connection member 27 and the stopper 29' for easy engagement. That is, when the rotary member 23 is rotated by the driving of the motor 21 while the lead member 24 is located at the limit position, i.e., the second stop part 23b', of the rotary member 23, the lead member 24 engages with the thread of the movement part 23a by an elastic force of the elastic member 28'. At this time, the elastic member 28' is more compressed than the elastic member 28 because the lead member 24 is located at the limit position. The elastic force of the elastic member 28' is greater than that of the elastic member 28.

A stepping motor that rotates by a predetermined angle every time a pulse signal is applied thereto may be used as the motor 21. The motor 21 may be driven in the forward direction and in the reverse direction. During the forward rotation of the motor 21, the collimator lens 19 is moved away from the object lens 12. During the reverse rotation of the motor 21, the collimator lens 19 is moved toward the object lens 12. That is, the holder holding the collimator lens 19 is movably installed on the optical path toward the object lens 12.

As is apparent from the above description, exemplary embodiments of the present general inventive concept provide an optical pickup apparatus to correct a spherical aberration of the optical disk with a motor instead of using a sensor to sense the position of the collimator lens during the movement of the collimator lens, thereby reducing costs.

Also, the collimator lens may be easily controlled by sensing the reference position of the collimator lens to correct a spherical aberration of the optical disc, thereby preventing damage to optical components due to malfunction of the collimator lens.

Also, the collimator lens may be controlled such that the collimator lens is moved to the reference position and then to the optimum position to correct the spherical aberration, thereby improving product reliability.

Exemplary embodiments of the present general inventive concept change a signal applied to the motor, thereby reducing power consumption.

Although several embodiments of the present invention have been illustrated and described, it would be appreciated by those skilled in the art that changes may be made in these embodiments without departing from the invention, the scope of which is defined in the claims.

## Claims

1. An optical pickup apparatus comprising:
a motor (21);
a rotary member (23) connected to the motor, the rotary member having a movement part (23a) and a stop part (23b);
a lead member (24) disposed on the rotary member such that the lead member moves along the movement part and stops at the stop part; and
a lens (19) connected to the lead member (24) to correct an aberration,
**characterized in**
**that** the movement part (23a) has a thread and the stop part (23b) is unthreaded , and by
a controller (30) to apply a first signal to the motor (21) to move the lead member (24) to the stop part, when correcting the aberration.

2. The optical pickup apparatus according to claim 1, wherein the stop part (23b) is solid.

3. The optical pickup apparatus according to claim 1, wherein the lens comprises a collimator lens (19) or an object lens.

4. The optical pickup apparatus according to claim 4, further comprising:
a light source (14) to emit light; and
an optical detector (16) to detect the light emitted from the light source and reflected from an optical disc, wherein
the controller (30) determines kind of the optical disc based on the detected light, and determines a target position corresponding to the determined optical disc.

5. The optical pickup apparatus according to claim 5, wherein the controller (30) applies a second signal to the motor (21) to move the lead member (24) from the stop part (23b) to the target position.

6. The optical pickup apparatus according to claim 4, wherein the second signal is a voltage signal less than the first signal.

7. The optical pickup apparatus according to claim 1, further comprising:
a holder to hold the lens;
a connection member (27) to connect the holder to the lead member (24);
a guide member (26) to guide a movement of the connection member (27); and
an elastic member (28) disposed on the connection member (27) to apply an elastic force to the connection member (27).

8. The optical pickup apparatus according to claim 4, wherein the stop part further has a second stop part (23b') extending from an opposite end of the movement part (23a) relative to the first stop part (23b).

9. The optical pickup apparatus according to claim 8, wherein the second stop part (23b') is located at a side opposite to the first stop part (23b) about the movement part (23a) to serve as a limit position of the lead member (24).

10. A method for controlling an optical pickup apparatus, comprising:
applying a first signal to a motor to move a lead member connected to a lens to a stop part of a rotary member;
applying a first signal to the motor to engage the lead member with a movement part of the rotary member when the movement of the lead member is completed; and
applying a second signal to the motor to move the lead member to a target position to correct an aberration when the engagement is completed
**characterized in that**
the movement part (23a) has a thread and the stop part (23b) is unthreaded, and by
controlling the motor (21) to move the lead member (24) to the unthreaded stop part, when correcting the aberration.

11. The method according to claim 10, wherein the moving the lead member to the stop part of the rotary member comprises moving the lens to a reference position.

12. The method according to claim 10, wherein the moving the lead member to the stop part of the rotary member comprises rotating the motor by predetermined steps.

13. The method according to claim 10, wherein the engaging the lead member with the movement part of the rotary member comprises engaging the lead member with a thread formed at the movement part.

14. The method according to claim 10,
wherein the moving the lead member to a target position determining kind of an optical disc when a command signal to record information to or read information from the optical disc is input; and
determining a predetermined target position corresponding to the determined kind of the optical disc.

## Patentansprüche

1. Optische Schreib/Lesekopfvorrichtung, umfassend:
einen Motor (21);
ein mit dem Motor verbundenes Rotationselement (23), wobei das Rotationselement einen Bewegungsteil (23a) und einen Anhalteteil (23b) aufweist;
ein Leitelement (24), das auf dem Rotationselement so angeordnet ist, dass sich das Leitelement entlang dem Bewegungsteil bewegt und am Anhalteteil anhält; und
eine Linse (19), die mit dem Leitelement (24) verbunden ist, um eine Aberration zu korrigieren,
**gekennzeichnet**
**dadurch, dass** der Bewegungsteil (23a) ein Gewinde aufweist und der Anhalteteil (23b) gewindelos ist, und durch
einen Controller (30), um ein erstes Signal an den Motor (21) anzulegen, um das Leitelement (24) zum Anhalteteil zu bewegen, wenn die Aberration korrigiert wird.

2. Optische Schreib/Lesekopfvorrichtung nach Anspruch 1, wobei der Anhalteteil (23b) massiv ist.

3. Optische Schreib/Lesekopfvorrichtung nach Anspruch 1, wobei die Linse eine Kollimatorlinse (19) oder eine Objektivlinse umfasst.

4. Optische Schreib/Lesekopfvorrichtung nach Anspruch 4, weiterhin umfassend:
eine Lichtquelle (14), um Licht auszusenden; und
einen optischen Detektor (16), um das von der Lichtquelle ausgesendete und von einer optischen Platte reflektierte Licht zu erfassen, wobei
der Controller (30) die Art der optischen Platte auf Grundlage des erfassten Lichts feststellt, und eine Zielposition in Entsprechung zur festgestellten optischen Platte festlegt.

5. Optische Schreib/Lesekopfvorrichtung nach Anspruch 5, wobei der Controller (30) ein zweites Signal an den Motor (21) anlegt, um das Leitelement (24) vom Anhalteteil (23b) zur Zielposition zu bewegen.

6. Optische Schreib/Lesekopfvorrichtung nach Anspruch 4, wobei das zweite Signal ein Spannungssignal ist, das niedriger als das erste Signal ist.

7. Optische Schreib/Lesekopfvorrichtung nach Anspruch 1, weiterhin umfassend:
einen Halter, um die Linse zu halten;
ein Verbindungselement (27), um den Halter mit dem Leitelement (24) zu verbinden;
ein Führungselement (26), um eine Bewegung des Verbindungselements (27) zu führen; und
ein elastisches Element (28), das auf dem Verbindungselement (27) angeordnet ist, um das Verbindungselement (27) mit einer elastischen Kraft zu beaufschlagen.

8. Optische Schreib/Lesekopfvorrichtung nach Anspruch 4, wobei der Anhalteteil weiterhin einen zweiten Anhalteteil (23b') aufweist, der sich von einem entgegengesetzten Ende des Bewegungsteils (23a) in Bezug auf den ersten Anhalteteil (23b) erstreckt.

9. Optische Schreib/Lesekopfvorrichtung nach Anspruch 8, wobei sich der zweite Anhalteteil (23b') an einer Seite gegenüber dem ersten Anhalteteil (23b) beim Bewegungsteil (23a) befindet, um als Grenzposition des Leitelements (24) zu dienen.

10. Verfahren zum Steuern einer optischen Schreib/Lesekopfvorrichtung, umfassend:
Anlegen eines ersten Signals an einen Motor, um ein mit einer Linse verbundenes Leitelement zu einem Anhalteteil eines Rotationselements zu bewegen;
Anlegen eines ersten Signals an den Motor, um das Leitelement mit einem Bewegungsteil des Rotationselements in Eingriff zu bringen, wenn die Bewegung des Leitelements abgeschlossen ist; und
Anlegen eines zweiten Signals an den Motor, um das Leitelement zu einer Zielposition zu bewegen, um eine Aberration zu korrigieren, wenn das In-Eingriff-Bringen abgeschlossen ist,
**gekennzeichnet**
**dadurch, dass** der Bewegungsteil (23a) ein Gewinde aufweist und der Anhalteteil (23b) gewindelos ist, und durch
Steuern des Motors (21), um das Leitelement (24) zum gewindelosen Anhalteteil zu bewegen, wenn die Aberration korrigiert wird.

11. Verfahren nach Anspruch 10, wobei das Bewegen des Leitelements zum Anhalteteil des Rotationselements das Bewegen der Linse zu einer Referenzposition umfasst.

12. Verfahren nach Anspruch 10, wobei das Bewegen des Leitelements zum Anhalteteil des Rotationselements das Drehen des Motors um vorgegebene Schritte umfasst.

13. Verfahren nach Anspruch 10, wobei das In-Eingriff-Bringen des Leitelements mit dem Bewegungsteil des Rotationselements das In-Eingriff-Bringen des Leitelements mit einem Gewinde umfasst, das am Bewegungsteil ausgebildet ist.

14. Verfahren nach Anspruch 10,
wobei das Bewegen des Leitelements zu einer Zielposition das Feststellen der Art einer optischen Platte umfasst, wenn ein Befehlssignal zum Aufzeichnen von Informationen auf der optischen Platte oder zum Lesen von Informationen aus ihr eingegeben wird; und
das Festlegen einer vorgegebenen Zielposition in Entsprechung zur festgestellten Art der optischen Platte.

## Revendications

1. Tête de lecture optique comprenant :
un moteur (21) ;
un élément rotatif (23) raccordé au moteur, l'élément rotatif présentant une partie à mouvement (23a) et une partie d'arrêt (23b) ;
un élément de menée (24) disposé sur l'élément rotatif de manière que l'élément de menée se déplace le long de la partie à mouvement et s'arrête sur la partie d'arrêt ; et
une lentille (19) reliée à l'élément de menée (24) pour corriger une aberration,
**caractérisée en ce que**
la partie à mouvement (23a) présente un filetage, et la partie d'arrêt (23b) est non filetée, et par un organe de commande (30) destiné à appliquer un premier signal au moteur (21) pour déplacer l'élément de menée (24) vers la partie d'arrêt lors de la correction de l'aberration.

2. Tête de lecture optique selon la revendication 1, dans laquelle la partie d'arrêt (23b) est pleine.

3. Tête de lecture optique selon la revendication 1, dans laquelle la lentille comprend une lentille de collimation (19) ou un objectif.

4. Tête de lecture optique selon la revendication 1, comprenant en outre :
une source lumineuse (14) pour émettre de la lumière ; et
un détecteur optique (16) pour détecter la lumière émise par la source lumineuse et réfléchie par un disque optique, dans laquelle
l'organe de commande (30) détermine le type du disque optique en se fondant sur la lumière détectée, et détermine une position cible correspondant au disque optique déterminé.

5. Tête de lecture optique selon la revendication 5, dans laquelle l'organe de commande (30) applique un second signal au moteur (21) pour déplacer l'élément de menée (24) de la partie d'arrêt (23b) à la position cible.

6. Tête de lecture optique selon la revendication 4, dans laquelle le second signal est un signal de tension électrique inférieur au premier signal.

7. Tête de lecture optique selon la revendication 1, comprenant en outre :
une monture pour tenir la lentille ;
un élément de liaison (27) pour relier la monture à l'élément de menée (24) ;
un élément de guidage (26) pour guider un déplacement de l'élément de liaison (27) ; et
un élément élastique (28) disposé sur l'élément de liaison (27) pour appliquer une force élastique sur l'élément de liaison (27).

8. Tête de lecture optique selon la revendication 4, dans laquelle la partie d'arrêt présente une seconde partie d'arrêt (23b') se prolongeant depuis une extrémité opposée de la partie à mouvement (23a) par rapport à la première partie d'arrêt (23b).

9. Tête de lecture optique selon la revendication 8, dans laquelle la seconde partie d'arrêt (23b') est située sur un côté qui est opposé à la première partie d'arrêt (23b) autour de la partie à mouvement (23a) et sert de position limite pour l'élément de menée (24).

10. Procédé de commande d'une tête de lecture optique, comprenant :
l'application d'un premier signal à un moteur afin de déplacer un élément de menée relié à une lentille vers une partie d'arrêt d'un élément rotatif ;
l'application d'un premier signal au moteur pour mettre en prise l'élément de menée avec une partie à mouvement de l'élément rotatif lorsque le déplacement de l'élément de menée est terminé ; et
l'application d'un second signal au moteur afin de déplacer l'élément de menée vers une position cible pour corriger une aberration lorsque la mise en prise est terminée,
**caractérisé en ce que**
la partie à mouvement (23a) présente un filetage et la partie d'arrêt (23b) est non filetée, et par la commande du moteur (21) de manière à entraîner le déplacement de l'élément de menée (24) vers la partie d'arrêt non filetée, lors de la correction de l'aberration.

11. Procédé selon la revendication 10, dans lequel le déplacement de l'élément de menée vers la partie d'arrêt de l'élément rotatif comprend le déplacement de la lentille vers une position de référence.

12. Procédé selon la revendication 10, dans lequel le déplacement de l'élément de menée vers la partie d'arrêt de l'élément rotatif comprend la rotation du moteur selon des pas prédéterminés.

13. Procédé selon la revendication 10, dans lequel la mise en prise de l'élément de menée avec la partie à mouvement de l'élément rotatif comprend la mise en prise de l'élément de menée avec un filetage formé sur la partie à mouvement.

14. Procédé selon la revendication 10,
dans lequel le déplacement de l'élément de menée vers une position cible comprend : déterminer le type d'un disque optique lorsqu'un signal de commande destiné à l'enregistrement des informations ou à la lecture des informations sur le disque optique est émis ; et
déterminer une position cible prédéterminée correspondant au type de disque optique déterminé.
